# FASCICULE DE BREVET EUROPEEN

(11) **EP 1 237 453 B1**
(45) Date de publication et mention de la délivrance du brevet: **02.01.2004**
(21) Numéro de dépôt: 00985421.7
(22) Date de dépôt: 13.12.2000
(51) Int. Cl.: A47J 45/07

(54) **DISPOSITIF DE PREHENSION POUR USTENSILE DE CUISSON**
GRIFFELEMENT FÜR KOCHGESCHIRR
GRIPPING DEVICE FOR A COOKING UTENSIL

(30) Priorité: 13.12.1999 FR 9915652
(43) Date de publication de la demande: 11.09.2002
(73) Titulaire: DJA DODANE JEAN ET ASSOCIES DJA CRISTEL, 25490 Fesches le Chatel (FR)
(72) Inventeur: DODANE, Paul, F-25400 Exincourt (FR)
(74) Mandataire: Le Bras, Hervé
(86) Numéro de dépôt international: PCT/FR2000/003501
(87) Numéro de publication internationale: WO 2001/043611

(56) Documents cités:
- EP-A- 0 852 924
- US-A- 4 206 853

## Description

L'invention concerne le domaine des ustensiles de cuisson comportant au moins une anse recourbée vers l'extérieur et formant plaque de préhension.

Pour manipuler ces ustensiles de cuisson, il est courant d'utiliser des poignées amovibles en forme de manche. L'amovibilité de la poignée permet de diminuer fortement l'encombrement global de l'ustensile, par exemple lorsque l'ustensile sert à la cuisson dans un four, ou lors de son nettoyage dans une machine ou pour le rangement.

Il est déjà connu des poignées amovibles qui peuvent coopérer avec l'anse de l'ustensile, cet anse comportant une lumière pour recevoir un crochet, bec ou tout autre élément fixe de la poignée, et qui comportent un organe coulissant monté sur la poignée et se verrouillant sur l'anse.

L'état de la technique est illustré par FR 2 579 444 et DE 25 10 894 qui montrent des poignées amovibles dans lesquels l'organe coulissant est actionné par un poussoir de commande disposé sur la face supérieure du manche.

EP 0 852 924, appartenant à la demanderesse, dévoile une poignée extra plate dans laquelle le poussoir de commande est monté coulissant sur la face supérieure de la poignée.

Ces poignées amovibles donnent en général satisfaction. Toutefois, lorsqu'elles sont manipulées par une personne âgée ou handicapée qui a des difficultés à soulever l'ustensile de cuisson d'une seule main agrippant fermement le manche, la position de la main peut se trouver à cheval sur le poussoir de commande. Si en outre le manche glissse légèrement dans la main de cette personne âgée ou handicapée, l'organe de verrouillage - déverrouillage peut se mettre dans la position déverrouillée, ce qui peut entraîner une catastrophe.

Le but de l'invention est de proposer une poignée qui comporte un manche, et dont la position du poussoir de commande permet d'éviter la situation décrite ci-dessus.

Selon l'invention le poussoir de commande est placé en bout du manche, afin de libérer entièrement celui-ci et éviter tout risque de déverrouillage intempestif en cours d'utilisation.

L'invention concerne donc un dispositif de préhension pour ustensile de cuisson présentant au moins une anse recourbée vers l'extérieur et dans laquelle est ménagée une lumière sensiblement parallèle au bord interne de l'anse, ledit dispositif de préhension comportant une poignée amovible munie d'un bec à double cambrage susceptible d'être introduit dans la lumière de l'anse par le dessus, un organe de verrouillage - déverrouillage monté sur ladite poignée de manière à pouvoir coulisser dans la direction de l'axe de ladite poignée, et des moyens élastiques pour repousser l'organe de verrouillage - déverrouillage vers le bec, ledit organe de verrouillage - déverrouillage présentant un poussoir de commande sur la face supérieure de la poignée, un verrou destiné à coopérer avec le bord externe de l'anse sur la face inférieure de la poignée et un coulisseau reliant le poussoir au verrou la poignée comportant un manche formé par une plaque, ladite plaque comportant entre les faces internes avant desdites plaquettes une lumière oblongue pour le guidage du coulisseau.

Selon l'invention ce dispositif de préhension est caractérisé par le fait que
la dite plaque est disposée en sandwich entre une plaquette supérieure et une plaquette inférieure, ladite plaque se prolongeant à l'extrémité avant dudit manche par une portion de plaque terminée par le bec,
b) une cavité, ouverte sur la face avant du manche est ménagée dans la face interne avant de chacune desdites plaquettes en regard de la lumière oblongue,
c) le poussoir de commande est disposé à l'avant du manche et est relié au coulisseau par un bras.

Les avantageuses dispositions suivantes sont en outre adaptées:
- L'organe de verrouillage - déverrouillage est réalisé en une seule pièce monobloc ;
- La plaque comporte dans le prolongement de la lumière oblongue vers l'arrière du manche, un évidement plus large que la lumière oblongue, afin de permettre le passage du verrou lors du montage ;
- Le verrou se présente sous la forme d'un plot qui en position rétractée loge en partie dans un échancrure ménagée dans la face avant de la plaquette inférieure ;
- Les cavités ménagées à l'avant des plaquettes et la lumière oblongue logent les moyens élastiques qui sont en appui sur la face arrière du coulisseau et le fond des cavités ;
- La plaque comporte en outre au moins une découpe destinée à loger une protubérance formée en correspondance sur la face interne d'au moins une plaquette, afin d'empêcher le glissement relatif de ladite plaquette par rapport à la plaque ;
- Au moins une plaquette comporte en regard de la découpe et sur sa face interne une cavité pour loger une protubérance formée en correspondance sur la face interne de l'autre plaquette.

D'autres avantages et caractéristiques de l'invention ressortiront à la lecture de la description suivante faite à titre d'exemple et en référence aux dessins annexés dans lesquels :
la figure 1 est une coupe longitudinale, selon un plan de symétrie vertical, du dispositif de préhension selon l'invention, en position d'utilisation sur l'anse d'un ustensile de cuisson ;
la figure 2 est une vue de dessus du dispositif de préhension de la figure 1 ;
la figure 3 est une coupe transversale, selon la ligne III-III de la figure 1, du dispositif de préhension ;
la figure 4 est une vue de dessus de la plaquette inférieure du manche ;
la figure 5 est une coupe longitudinale selon la ligne V-V de la figure 4 ;
la figure 6 est une vue de dessus de la plaque du manche ;
la figure 7 est une coupe longitudinale selon la ligne VII-VII de la figure 6 ;
la figure 8 est une vue de dessous de la plaquette supérieure du manche ;
le figure 9 est une coupe longitudinale selon la ligne IX-IX de la figure 8.

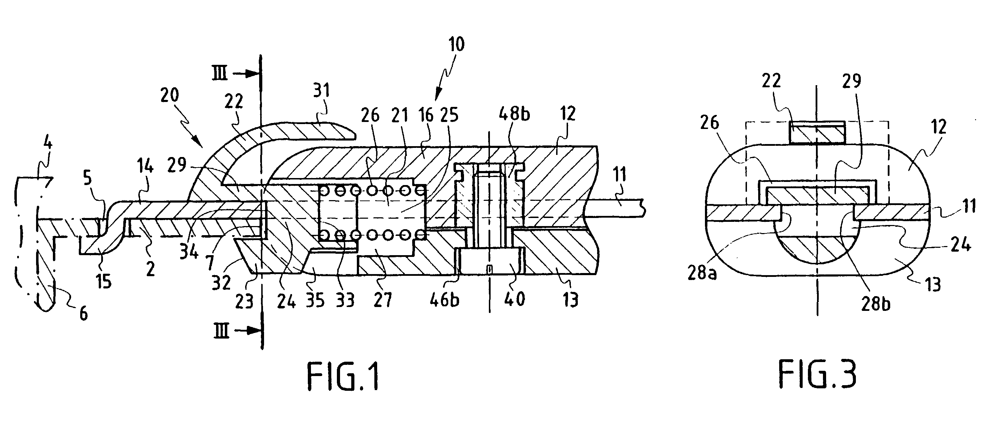

Les figures 1, 2 et 3 montrent l'anse 2 d'un ustensile de cuisson dont seule une partie périphérique 4 est montrée. Cette anse 2 comporte une lumière 5 sensiblement parallèle à son bord interne 6. L'anse 2 s'étend vers l'extérieur de l'ustensile, sensiblement à l'horizontale et présente un bord externe 7 sensiblement parallèle au bord interne 6.

La référence 10 désigne une poignée amovible servant à la préhension de l'ustensile de cuisson.

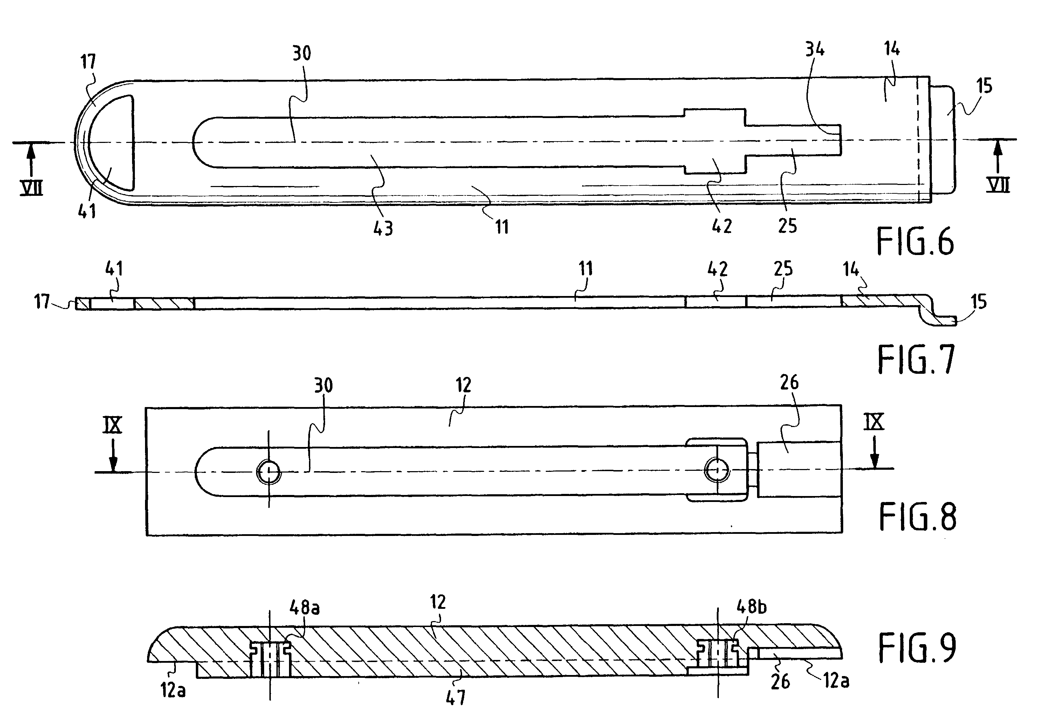

Cette poignée amovible 10 comporte une plaque monobloc 11 rigide et de faible épaisseur disposée en sandwich entre une plaquette supérieure 12 et une plaquette inférieure 13. Les plaquettes 12 et 13 ont sensiblement la même largeur que la plaque 11, mais elles sont plus courtes que la plaque 11. Cette dernière présente à l'avant des plaquettes 12 et 13 une portion de plaque 14 qui présente à son extrémité un bec 15 double cambrage qui est susceptible de pénétrer par le dessus de l'anse 2 dans la lumière 5. La largeur du bec 15 est inférieure à la largeur de la plaque 11 et sensiblement égale à la longueur de la lumière 5. La poignée 10 présente ainsi de l'avant vers l'arrière, la portion de plaque 14, et un manche 16 formé par les plaquettes 12 et 13 disposées de part et d'autre de la plaque 11. Cette dernière s'étend également à l'extrémité arrière du manche 16, où elle comporte un arceau 17 (voir la figure 6) permettant l'accrochage de la poignée amovible 10 sur un crochet de rangement.

La poignée 10 comporte à l'extrémité avant du manche 16 un dispositif de verrouillage - déverrouillage 20, sollicité en permanence vers le bec 15 par des moyens élastiques 21 disposés à l'intérieur du manche 16.

Ce dispositif de verrouillage - déverrouillage 20 comporte, au-dessus de la portion de plaque 14, un poussoir de commande 22, en dessous de la portion de plaque 14 et écarté de cette dernière de l'épaisseur de l'anse 2, un verrou 23 destiné à coopérer avec le bord externe 7 de l'anse 2, et un coulisseau 24 qui relie le poussoir de commande 22 au verrou 23. Le coulisseau 24 est monté coulissant dans une lumière oblongue 25 ménagée dans la plaque 11 entre les parois internes 12a, 13a avant des plaquettes 12 et 13.

Des cavités 26 et 27 ouvertes sur la face avant du manche 16 sont ménagées en correspondance respectivement dans les parois internes 12a et 13a en regard de la lumière oblongue 25.

Les cavités 26 et 27 sont délimitées par des parois parallèles à l'axe 30 de la poignée amovible 16 qui sont disposées à une faible distance du coulisseau 24 afin de ne pas gêner le coulissement de ce dernier sur la plaque 11. La largeur des cavités 26 et 27 est supérieure à la largeur de la lumière oblongue 25.

Le coulisseau 24, ainsi que cela se voit clairement sur la figure 3 comporte deux rainures latérales 28a et 28b parallèles à l'axe 30 dans lesquelles logent les bords de la lumière oblongue 25.

Le coulisseau 24 comporte, au-dessus de la portion de paroi 14, un bras 29 à l'extrémité duquel est porté la poussoir de commande 22.

Le poussoir de commande 22 disposé sur l'avant du manche 16 se présente sous la forme d'une plaque recourbée prolongée par une oreille 31 disposée au-dessus de l'extrémité avant du manche 16.

Le verrou 23 se présente sous la forme d'un plot qui présente, sur l'avant, une paroi oblique 32 qui permet l'encliquetage automatique du verrou 23 sur le bord 7 de l'anse 2, lorsque le bec 15 est introduit dans la lumière 5 de l'anse 2 et que l'on fait pivoter vers le bas la poignée 10 autour du bec 15.

Les moyens élastiques 21 se présentent sous la forme d'un ressort en appui sur le fond des cavités 26 et 27 et en appui sur la face arrière 33 du coulisseau 24.

De manière avantageuse le dispositif de verrouillage - déverrouillage 20 est réalisé en une seule pièce par moulage.

Les moyens élastiques 21 repoussent le dispositif 20 vers le bec 15. Dans cette position le coulisseau 24 est en appui sur le bord avant 34 de la fenêtre oblongue 25, qui est situé dans le plan de la face avant du manche 16, et le bras 29 s'étend vers l'avant au-dessus de la portion de paroi externe 14 de la plaque 11. Lorsqu'on exerce manuellement une force sur la face avant du poussoir de commande 22, force dirigée vers l'arrière du manche 16 et à l'encontre des forces élastiques 21, le coulisseau 24 coulisse vers l'arrière dans la fenêtre oblongue 25, le bras 29 vient loger dans la cavité 26, et le verrou 23 vient loger en partie dans une échancrure 35 ménagée dans la face avant de la plaquette inférieure 13. Dans cette position rétractée du dispositif de verrouillage - déverrouillage 20, le poussoir de commande 22 recouvre l'extrémité avant de la plaquette supérieure 12, et le verrou 23 est dégagé du bord externe 7 de l'anse 2, ce qui permet de désolidariser la poignée amovible 10 de l'anse 2.

Les plaquettes 12 et 13 sont fixées entre elles et fixées sur la plaque 11 de manière connue au moyen de deux vis 40.

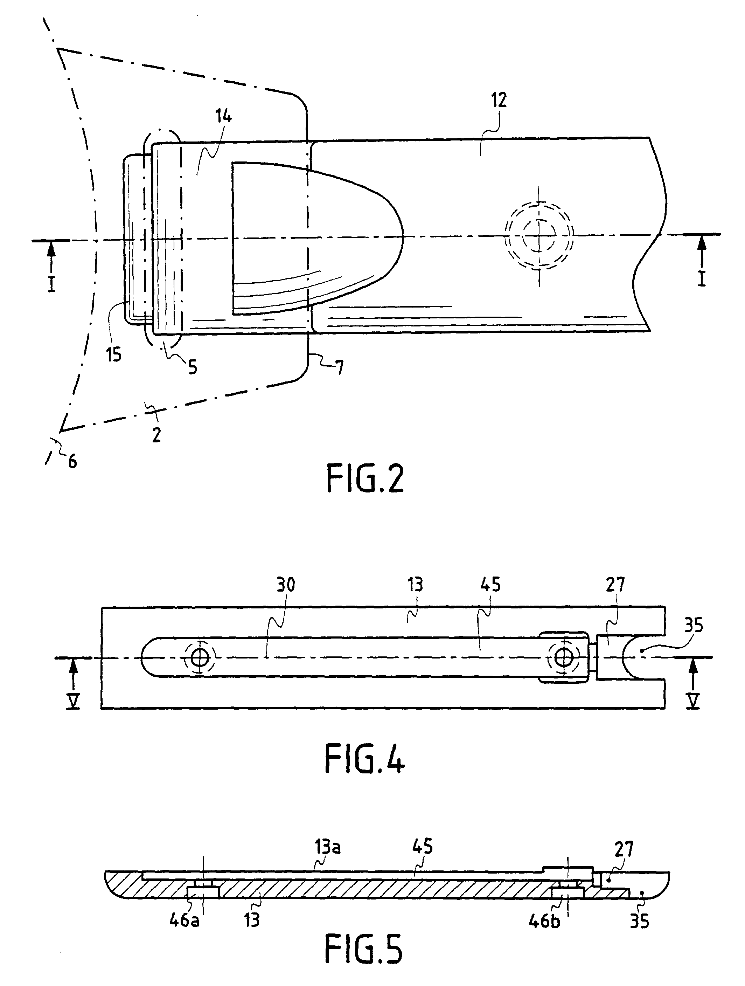

Les figures 4 à 9 montrent en détail la plaque 11, la plaquette supérieure et la plaquette inférieure.

Comme on le voit sur les figures 6 et 7, la plaque 11 comporte à l'extrémité avant la portion de plaque 14 terminée par le bec 15 et à l'extrémité arrière l'arceau 17 qui entoure un orifice 41. Cette plaque 11 est symétrique par rapport à un plan médian passant par l'axe 30. Entre la portion de plaque 14 et l'orifice 41 sont ménagés, par découpe, la lumière oblongue 25 de forme rectangulaire qui permet le coulissement du coulisseau 24, un évidement 42 , plus large que la lumière 25, puis une découpe 43 dont la fonction sera expliquée plus loin. L'évidement 42 a une dimension au moins égale à la plus grande section du verrou 23. Pour monter la poignée 10, on commence par monter le dispositif de verrouillage - déverrouillage 20 sur la plaque 11, en faisant passer le verrou 23 par l'évidement 42, puis en repoussant le coulisseau 24 vers la lumière 25.

Les figures 4 et 5 montrent la plaquette inférieure 13, qui présente, sur sa face interne 13a, une cavité interne 45 en regard de l'évidement 42 et de la découpe 43 et des alésages 46a, 46b pour le passage des vis 40 et le logement des têtes de vis. A l'extrémité avant de la plaquette supérieure 13, on voit la cavité 27 qui loge en partie le coulisseau 24, et l'échancrure 35 dans laquelle loge en partie le verrou 23 en position rétractée.

Les figures 8 et 9 montrent la plaquette supérieure 12 qui comporte à son extrémité avant la cavité 26. Au-dessous de la face interne 12a de la plaquette supérieure est prévue une excroissance 47 dont la section horizontale est identique aux sections de l'évidement 42 et de la découpe 43 de la plaque 11, et à la section horizontale de la cavité 45 de la plaquette inférieure 13. L'excroissance 47 a sensiblement une épaisseur égale à la somme de l'épaisseur de la plaque 11 et de la profondeur de la cavité 45 de la plaquette inférieure 13.

La fonction de cette excroissance 47 est d'empêcher un coulissement relatif entre la plaquette supérieure 12, la plaque 11 et la plaquette inférieure 13.

Des inserts 48a et 48b comportant des alésages taraudés pour les vis 40 sont noyés dans la plaquette supérieure 12.

Les plaquettes 12 et 13 sont réalisés par moulage d'un matériau plastique dur.

La plaque 11 est réalisée en un métal inoxydable rigide.

## Revendications

1. Dispositif de préhension pour ustensile de cuisson présentant au moins une anse (2) recourbée vers l'extérieur et dans laquelle est ménagée une lumière (5) sensiblement parallèle au bord interne (6) de l'anse (2), ledit dispositif de préhension comportant une poignée amovible (10) munie d'un bec (15) à double cambrage susceptible d'être introduit dans la lumière (5) de l'anse (2) par le dessus, un organe de verrouillage - déverrouillage (20) monté sur ladite poignée (10) de manière à pouvoir coulisser dans la direction de l'axe de ladite poignée (10), et des moyens élastiques (21) pour repousser l'organe de verrouillage - déverrouillage (20) vers le bec (15), ledit organe de verrouillage - déverrouillage (20) présentant un poussoir de commande (22) sur la face supérieure de la poignée (10), un verrou (23) destiné à coopérer avec le bord externe (7) de l'anse (2) sur la face inférieure de la poignée (10) et un coulisseau (24) reliant le poussoir (22) au verrou (23),
la poignée comportant un manche (16) formé par une plaque (11), ladite plaque (11) comportant entre les faces internes (12a, 13a) avant desdites plaquettes (12, 13) une lumière oblongue (25) pour le guidage du coulisseau (24), **caractérisé par le fait que**
a) ladite plaque est disposée en sandwich entre une plaquette supérieure (12) et une plaquette inférieure (13), ladite plaque (11) se prolongeant à l'extrémité avant dudit manche (16) par une portion de plaque (14) terminée par le bec (15),
b) une cavité (26, 27), ouverte sur la face avant du manche (16) est ménagée dans la face interne (12a, 13a) avant de chacune desdites plaquettes (12, 13) en regard de la lumière (25) oblongue ,
c) le poussoir de commande (22) est disposé à l'avant du manche (16) et est relié au coulisseau (24) par un bras (29).

2. Dispositif de préhension selon la revendication 1, **caractérisé par le fait que** l'organe de verrouillage - déverrouillage (20) est réalisé en une seule pièce monobloc.

3. Dispositif de préhension selon la revendication 2, **caractérisé par le fait que** la plaque (11) comporte dans le prolongement de la lumière (25) oblongue vers l'arrière du manche (16), un évidement (42) plus large que ladite lumière (25) oblongue, afin de permettre le passage du verrou (23) lors du montage.

4. Dispositif de préhension selon la revendication 3, **caractérisé par le fait que** le verrou (23) se présente sous la forme d'un plot qui en position rétractée loge en partie dans une échancrure (35) ménagée dans la face avant de la plaquette inférieure (13).

5. Dispositif de préhension selon l'une des revendications 3 ou 4, **caractérisé par le fait que** les cavités (26, 27) ménagées à l'avant des plaquettes (12, 13) et la lumière (25) oblongue logent les moyens élastiques (21) qui sont en appui sur la face arrière (33) du coulisseau (24) et le fond des cavités (26, 27).

6. Dispositif de préhension selon l'une quelconque des revendications 1 à 5, **caractérisé par le fait que** la plaque (11) comporte en outre au moins une découpe (43) destinée à loger une protubérance (47) formée en correspondance sur la face interne (12a, 13a) d'au moins une plaquette (12, 13), afin d'empêcher le glissement relatif de ladite plaquette (12, 13) par rapport à la plaque (11).

7. Dispositif de préhension selon la revendication 6, **caractérisé par le fait qu'**au moins une plaquette (12, 13) comporte en regard de la découpe (43) et sur sa face interne (12a, 12b) une cavité (45) pour loger une protubérance (47) formée en correspondance sur la face interne (12a, 12b) de l'autre plaquette (12, 13).

## Claims

1. A handle device for a cooking utensil presenting at least one outwardly-directed lug (2) having a slot (5) formed therein substantially parallel to the inside edge (6) of the lug (2), said handle device comprising a removable handle (10) provided with an S-bend nose (15) suitable for being inserted into the slot (5) of the lug (2) from above, a locking/unlocking member (20) mounted on said handle (10) so as to be capable of sliding along the axis of said handle (10), and resilient means (21) for urging the locking/unlocking member (20) towards the nose (15), said locking/unlocking member (20) presenting a control pushbutton (22) on the top face of the handle (10), a latch (23) on the bottom face of the handle (10) for co-operating with the outside edge (7) of the lug (2), and a slider (24) interconnecting the pushbutton (22) and the latch (23), the handle comprising a grip (16) formed by a plate (11), said plate (11) having an oblong slot (25) between the inside front faces (12a, 13a) of said strips (12, 13) for guiding the slider (24); the device being **characterised by** the fact that:
a) said plate is sandwiched between a top strip (12) and a bottom strip (13), said plate (11) being extended at the front end of said grip (16) by a plate portion (14) which is terminated by the nose (15);
b) a cavity (26, 27) open to the front face of the grip (16) is provided in the inside front face (12a, 13a) of every strips (12, 13) in register with the oblong slot (25); and
d) the control pushbutton (22) is placed at the front of the handle (16) and is connected to the slider (24) by an arm (29).

2. A handle device according to claim 1, **characterised by** the fact that the locking/unlocking member (20) is made as a single piece.

3. A handle device according to claim 2, **characterised by** the fact that the plate (11) includes a recess (42) towards the rear end of the grip (16) and in line with the oblong slot (25), the recess (42) being broader than said oblong slot (25) so as to allow the latch (23) to be passed therethrough during assembly.

4. A handle device according to claim 3, **characterised by** the fact that the latch (23) is in the form of a stud which, in the retracted position, is received in part in a notch (35) formed in the front face of the bottom strip (13).

5. A handle device according to claim 3 or claim 4, **characterised by** the fact that the oblong slot (25) and the cavities (26, 27) provided at the front ends of the strips (12, 13) house resilient means (21) bearing against the rear face (33) of the slider (24) and against the end wall of the cavities (26, 27).

6. A handle device according to any one of claims 1 to 5, **characterised by** the fact that the plate (11) also includes at least one cut-out (43) for receiving a corresponding projection (47) formed on the inside face (12a, 13a) of at least one of the strips (12, 13) so as to prevent sliding of said strip (12, 13) relative to the plate (11).

7. A handle device according to claim 6, **characterised by** the fact that at least one of the strips (12, 13) has a cavity (45) in register with the cut-out (43) and in its inside face (12a, 12b) for receiving a corresponding projection (47) formed on the inside face (12a, 12b) of the other strip (12, 13).

## Patentansprüche

1. Griffelement für Kochgeschirr, das wenigstens einen Bügel (2) aufweist, der nach außen gekrümmt ist und in dem ein im wesentlichen parallel zum inneren Rand (6) des Bügels (2) verlaufender Schlitz (5) angebracht ist, wobei das Griffelement einen abnehmbaren Griff (10), der mit einer Nase (15) mit doppelter Krümmung ausgestattet ist, die in den Schlitz (5) des Bügels (2) von oben eingeführt werden kann, ein Verriegelungs - Entriegelungselement (20), das auf dem Griff (10) befestigt ist, derart dass es in Richtung der Achse des Griffs (10) gleiten kann, und elastische Mittel (21), um das Verriegelungs - Entriegelungselement (20) zu der Nase (15) zu schieben, aufweist,
wobei das Verriegelungs - Entriegelungselement (20) einen Steuerungsdrücker (22) auf der Oberseite des Griffs (10), einen Riegel (23), der dazu bestimmt ist, mit dem äußeren Rand (7) des Bügels (2) auf der Unterseite des Griffs (10) zusammenzuwirken, und einen Schieber (24), der den Drücker (22) mit dem Riegel (23) verbindet, aufweist, wobei der Griff einen aus einer Platte (11) gebildeten Halter (16) aufweist, wobei die Platte (11) zwischen den Innenseiten (12a, 13a) vor den Plättchen (12, 13) einen Längsschlitz (25) zum Führen des Schiebers (24) aufweist; **gekennzeichnet durch** die Tatsache, dass
a) die Platte übereinandergeschichtet zwischen einem oberen Plättchen (12) und einem unteren Plättchen (13) angeordnet ist, wobei die Platte (11) sich am vorderen Ende des Halters (16) **durch** einen mit der Nase (15) endenden Plattenabschnitt (14) verlängert,
b) eine auf der vorderen Seite des Halters (16) offene Vertiefung (26, 27) in der Innenseite (12a, 13a) vor jedem der Plättchen (12, 13) gegenüber dem Längsschlitz (25) angebracht ist,
c) der Steuerungsdrücker (22) vor dem Halter (16) angeordnet und mit dem Schieber (24) **durch** einen Arm (29) verbunden ist.

2. Griffelement nach Anspruch 1, **gekennzeichnet durch** die Tatsache, dass das Verriegelungs - Entriegelungselement (20) aus einem einzigen, einstückig gebildeten Teil hergestellt ist.

3. Griffelement nach Anspruch 2, **gekennzeichnet durch** die Tatsache, dass die Platte (11) in der Verlängerung des Längsschlitzes (25) zum Hinteren des Halters (16) hin eine Aussparung (42) aufweist, die breiter ist als der Längsschlitz (25), um den Durchtritt des Riegels (23) bei der Montage zu ermöglichen.

4. Griffelement nach Anspruch 3, **gekennzeichnet durch** die Tatsache, dass der Riegel (23) sich in Form eines Stifts präsentiert, der in zurückgezogener Stellung teilweise In einem bogenförmigen Ausschnitt (35) liegt, der in der Vorderseite des unteren Plättchens (13) angebracht ist.

5. Griffelement nach einem der Ansprüche 3 oder 4, **gekennzeichnet durch** die Tatsache, dass die vor den Plättchen (12, 13) und dem Längsschlitz (25) angebrachten Vertiefungen (26, 27) in den elastischen Mitteln (21) liegen, die auf die Hinterseite (33) des Schiebers (24) und den Boden der Vertiefungen (26, 27) drücken.

6. Griffelement nach einem der Ansprüche 1 bis 5, **gekennzeichnet durch** die Tatsache, das die Platte (11) außerdem wenigstens einen Ausschnitt (43) aufweist, der dazu bestimmt ist, eine Ausstülpung (47) aufzunehmen, die entsprechend auf der Innenseite (12a, 13a) wenigstens eines Plättchens (12, 13) gebildet ist, um das jeweilige Gleiten des Plättchens (12, 13) bezüglich der Platte (11) zu verhindern.

7. Griffelement nach Anspruch 6, **gekennzeichnet durch** die Tatsache, dass wenigstens ein Plättchen (12, 13) gegenüber dem Ausschnitt (43) und auf der Innenseite (12a, 12b) eine Vertiefung (45) aufweist, um eine entsprechend auf der Innenseite (12a, 12b) des anderen Plättchens (12, 13) gebildete Ausstülpung (47) aufzunehmen.
